# FASCICULE DE BREVET EUROPEEN

(11) **EP 3 019 401 B1**
(45) Date de publication et mention de la délivrance du brevet: **01.11.2017**
(21) Numéro de dépôt: 14750564.8
(22) Date de dépôt: 15.07.2014
(51) Int. Cl.: B64D 11/00, B64D 11/06

(54) **DISPOSITIF DESTINÉ À AMÉLIORER LE CONFORT DES PASSAGERS D'UN MOYEN DE TRANSPORT SANS ALTÉRER LA CAPACITÉ D'EMPORT DE PASSAGERS DE CELUI-CI**
VORRICHTUNG ZUR VERBESSERUNG DES KOMFORTS VON PASSAGIEREN EINES TRANSPORTMITTELS OHNE WECHSEL VON DESSEN PERSONENBEFÖRDERUNGSKAPAZITÄT
DEVICE INTENDED TO IMPROVE THE COMFORT OF PASSENGERS OF A MEANS OF TRANSPORT WITHOUT CHANGING THE PASSENGER CARRYING CAPACITY OF SAME

(30) Priorité: 12.07.2013 FR 1301649
(43) Date de publication de la demande: 18.05.2016
(73) Titulaire: Sebgo, 49320 Charce Saint Ellier (FR)
(72) Inventeur: GREGOIRE, Olivier, 49320 Charce Saint Ellier (FR)
(74) Mandataire: Jacobacci Coralis Harle
(86) Numéro de dépôt international: PCT/FR2014/051818
(87) Numéro de publication internationale: WO 2015/004405

(56) Documents cités:
- WO-A1-02/32718
- DE-A1- 3 901 140
- US-A- 4 066 227
- US-A- 6 056 239

## Description

### DOMAINE TECHNIQUE AUQUEL SE RAPPORTE L'INVENTION

La présente invention concerne le domaine général du transport de passagers. Elle concerne plus particulièrement un dispositif destiné à améliorer le confort des passagers d'un moyen de transport sans altérer la capacité d'emport de celui-ci.

### ARRIERE-PLAN TECHNOLOGIQUE

Dans le cas du transport par un avion en particulier, dans les classes économiques, les passagers sont la plupart du temps assis sur des sièges disposés par rangées successives.

Le pas entre chaque rangée est souvent très restreint et les genoux des passagers sont en contact, ou pratiquement en contact, avec le dossier du siège de la rangée précédente. Ce faible pas empêche ou limite fortement la possibilité d'incliner le dossier du siège pour obtenir une position plus confortable, en particulier pour s'assoupir pendant un long voyage.

De plus, les passagers des classes économiques ne peuvent avoir aucune intimité à cause de la promiscuité et de l'absence de cloisonnement.

Pour remédier à ces inconvénients, certaines solutions ont déjà été proposées en décalant par exemple en hauteur deux rangées successives de sièges (voir notamment les documents US-2006/0060703 A1, US-5 716 026 A ou US-2009/0066121 A1), mais dans ces cas la capacité d'emport des passagers est diminuée et l'amélioration du confort n'est pas évidente, en particulier pour les passagers des niveaux supérieurs.

D'autres solutions proposent des cabines superposées ou décalées en escalier (voir US-2006/0000947 A1 par exemple), mais si le confort des passagers est ici nettement amélioré, la capacité d'emport est très diminuée.

Le document US-2002/0033432 A1 propose une autre solution à deux planchers superposés, le plancher supérieur étant crénelé pour que les passagers du niveau inférieur puissent se relever. Cette solution est confortable, mais elle nécessite pour fonctionner de placer les passagers du niveau supérieur en quinconce par rapport à ceux du niveau inférieur. De ce fait, le pas entre chaque rangée de passagers d'un même niveau est important et la perte en capacité d'emport est significative.

Le document DE-3 901 140 A1 décrit de son côté une structure d'aménagement de sièges de passagers au sein de l'habitacle d'un véhicule de transport, lequel véhicule comprend deux parois latérales, un plancher et un toit.
Cette structure d'aménagement de sièges comprend deux rangées d'alvéoles adaptées à la réception des passagers en position assise, chacune sur deux niveaux (l'un supérieur et l'autre inférieur), et placées chacune entre l'une des parois latérales du véhicule de transport et un couloir central.
Elle comprend plus précisément un volume général sensiblement allongé, une surface inférieure horizontale et plane, une pluralité d'alvéoles inférieures identiques entre elles, disposées les unes à la suite des autres sur un niveau inférieur, et une pluralité d'alvéoles supérieures identiques entre elles, disposées les unes à la suite des autres sur un niveau supérieur.
Le profil des alvéoles du niveau inférieur est sensiblement identique au profil des alvéoles du niveau supérieur, les profils de chaque alvéole comportant :
- une assise sensiblement horizontale,
- un dossier sensiblement incliné par rapport à la verticale,
- un repose-pieds sensiblement perpendiculaire au dossier,
- une surface d'appui des jambes des passagers sensiblement parallèle au dossier,
- un plafond sensiblement horizontal,
- une face avant sensiblement parallèle au dossier, et
- une zone supérieure située au-dessus de la tête des passagers sensiblement perpendiculaire au dossier incliné.
Les assises des alvéoles supérieures sont situées en opposition des plafonds des alvéoles inférieures ; les surfaces d'appui des jambes des passagers des alvéoles supérieures sont situées sensiblement dans le prolongement des dossiers des alvéoles inférieures ; les repose-pieds des alvéoles supérieures sont situés en opposition des zones supérieures situées au-dessus de la tête des passagers des alvéoles inférieures ; et la distance entre la partie inférieure de la structure et le point bas des repose-pieds des alvéoles supérieures est inférieure à la distance entre la partie inférieure de la structure rigide et les plafonds des alvéoles inférieures.
Les assises supérieures sont décalées latéralement par rapport aux assises inférieures du fait du tronçon courbe entre les parois latérales et le plafond.

Au niveau de chacune des rangées, l'accès aux alvéoles inférieures et supérieures s'effectue côté couloir :
- directement à partir du plancher de l'habitacle pour les alvéoles inférieures et,
- à partir d'une marche d'accès pour les alvéoles supérieures.

Mais un tel agencement n'est pas optimal, tant en terme de rigidité qu'en terme d'ergonomie. L'accès aux alvéoles est malaisé et pose des problèmes de sécurité en cas d'évacuation. De plus, le gain en capacité d'une telle structure n'est pas évident du fait de la présence d'un seul siège par alvéole.

On connait encore du document US-4 066 227 A un aménagement de sièges au sein de l'habitacle d'un avion, dans lequel plusieurs rangées de doubles sièges (en l'occurrence quatre) sont ménagées à distance égale les unes des autres sur un plancher, correspondant à un premier niveau d'assises.
Un étage supérieur est prévu au sein de l'habitacle, accessible par un escalier ménagé dans la partie centrale (entre les deux rangées centrales de doubles sièges), pour former un second niveau d'assise.
Cet étage supérieur comporte un couloir dans le prolongement de l'escalier d'accès, lequel couloir se prolonge par des structures latérales de plancher supportant chacun une rangée de doubles sièges, ces structures latérales de plancher étant prolongées sur les côtés par des panneaux supports assurant la liaison avec le plafond de l'habitacle.

L'espace vertical pour les passagers est ici très limité car le plancher supérieur est plat et les pieds des passagers supérieurs sont donc forcément situés au dessus du plafond du niveau inférieur.

Dans le cadre d'un tel agencement, il est aussi nécessaire de relier très solidement le plancher supérieur au plafond de l'habitacle, car en cas d'accident, le poids des sièges et des passagers situés au niveau supérieur est encaissé en grande partie par le plafond de l'habitacle.

### OBJET DE L'INVENTION

Pour remédier à ces inconvénients, la présente invention propose une structure modulaire à double étage destinée à être montée dans l'habitacle d'un moyen de transport tel qu'un avion, entre un plancher et un plafond, pour l'assise des passagers, laquelle structure modulaire comprend :
- un volume général sensiblement allongé selon un axe longitudinal,
- une pluralité d'alvéoles inférieures, disposées les unes à la suite des autres selon une direction parallèle audit axe longitudinal et sur un niveau inférieur,
- une pluralité d'alvéoles supérieures, disposées les unes à la suite des autres selon une direction parallèle audit axe longitudinal et sur un niveau supérieur situé au-dessus dudit niveau inférieur,
ces alvéoles étant destinées à recevoir chacune au moins une structure de siège pour un passager,
les profils des alvéoles inférieures du niveau inférieur étant identiques ou sensiblement identiques aux profils des alvéoles supérieures du niveau supérieur, chaque alvéole possédant un profil général permettant une position assise, ce profil comprenant :
- une assise horizontale ou sensiblement horizontale,
- un dossier incliné par rapport à la verticale,
- un repose-pieds,
- une surface d'appui des jambes des passagers,
- un plafond,
- une face avant sensiblement parallèle au dossier,
lesdites assises des alvéoles supérieures étant situées en opposition des plafonds des alvéoles inférieures ;
et cette structure est caractérisée par le fait qu'elle consiste en une structure rigide délimitée au moins par - deux parois latérales verticales, parallèles entre elles, étendues selon une direction parallèle audit axe longitudinal, - une structure arrière - une structure inférieure destinée à reposer sur le plancher dudit habitacle, et à être fixée sur ce dernier, et - une structure supérieure destinée à être solidarisée avec le plafond dudit habitacle, et entre lesquelles parois et structures sont ménagées lesdites alvéoles,
lesquelles alvéoles inférieures et supérieures sont ouvertes dans l'une quelconque desdites parois latérales verticales,
l'accès des passagers aux alvéoles inférieures du niveau inférieur se faisant du côté d'une paroi latérale verticale de la structure rigide et à un premier niveau de l'habitacle du moyen de transport, et
l'accès des passagers aux alvéoles supérieures du niveau supérieur se faisant du côté de la paroi latérale verticale opposée à la précédente de la structure rigide, et à un second niveau surélevé par rapport audit premier niveau.

De préférence, cette structure rigide est encore délimitée par une structure avant située dans le prolongement des parois latérales, de la structure inférieure et de la structure supérieure.

Selon encore d'autres particularités, la structure modulaire comporte une pluralité d'alvéoles inférieures et supérieures identiques ou sensiblement identiques entre elles, dans lesquelles :
- ledit repose-pieds est sensiblement perpendiculaire au dossier,
- ladite surface d'appui des jambes des passagers est sensiblement parallèle au dossier, lesdites surfaces d'appui des alvéoles supérieures étant situées sensiblement dans le prolongement des dossiers des alvéoles inférieures,
- ledit plafond est sensiblement horizontal,
- une zone supérieure destinée à être située au-dessus de la tête des passagers est sensiblement perpendiculaire au dossier incliné,
- lesdits repose-pieds des alvéoles supérieures sont situés en opposition desdites zones supérieures des alvéoles inférieures,
- la distance entre ladite structure inférieure et le point bas desdits repose-pieds des alvéoles supérieures est inférieure à la distance entre ladite structure inférieure et lesdits plafonds des alvéoles inférieures, et
- lesdites assises des alvéoles supérieures sont situées sensiblement à l'aplomb verticalement des assises des alvéoles inférieures.

De préférence ladite structure avant et/ou ladite structure arrière se présente(nt) sous la forme d'un caisson muni d'au moins une ouverture d'accès, éventuellement obturée par une porte, pour constituer un local technique ou un cabinet de toilette.

Selon une autre particularité la structure modulaire est réalisée par un assemblage d'éléments réalisés séparément, à savoir, au moins, - des panneaux coudés, - des entretoises de panneaux coudés, - des blocs assise inférieurs, - des embases de plafond et - des panneaux de parois latérales.

D'autre part, la structure supérieure intègre ou supporte avantageusement une pluralité de coffres à bagages.

Encore de préférence, chacune des alvéoles inférieures et supérieures comporte au moins une structure de siège rapportée sur son assise.

Selon encore une autre particularité, ladite structure inférieure comporte des blocs assise inférieurs supportant au moins certaines des structures de sièges des alvéoles inférieures, et lesquels blocs assise inférieurs intègrent chacun au moins un coffre à bagages muni d'une ouverture associée à un volet d'obturation, ladite ouverture étant située sur le dessus dudit bloc assise inférieur et l'assise de ladite structure de siège étant prévue basculante pour constituer ledit volet d'obturation.

Chaque alvéole supérieure comporte de préférence une fenêtre dans la paroi opposée à celle de son accès principal pour les passagers.

L'invention concerne encore un aménagement d'une pluralité de structures modulaires telles que définies ci-dessus, dans l'habitacle d'un moyen de transport, lesdites structures modulaires étant placées côte à côte dans ledit habitacle, leurs axes longitudinaux étant parallèles ; en outre, les alvéoles inférieures ou supérieures se correspondent dans l'intervalle entre deux structures modulaires, ceci afin de partager le même niveau d'accès, aux alvéoles inférieures ou supérieures dans ledit intervalle.

Dans ce cadre, l'habitacle comporte de préférence au moins une rangée de sièges fixés à son plancher, de chaque côté de la pluralité de structures modulaires.

### DESCRIPTION DETAILLEE DE PLUSIEURS EXEMPLES DE REALISATION

L'invention sera encore illustrée, sans être aucunement limitée, par la description suivante de plusieurs formes de réalisation possibles, données uniquement à titre d'exemple, en relation avec les dessins annexés dans lesquels :
- la figure 1 est une vue schématique, en perspective, d'une structure modulaire rigide selon l'invention, avec des alvéoles traversantes;
- la figure 2 est une vue schématique en perspective d'une structure modulaire rigide selon l'invention, avec les alvéoles supérieures ouvertes du côté opposé aux alvéoles inférieures, vue du côté de l'ouverture des alvéoles inférieures ;
- la figure 3 est une vue schématique en perspective d'une structure modulaire rigide selon l'invention, encore avec les alvéoles supérieures ouvertes du côté opposé aux alvéoles inférieures, vue du côté de l'ouverture des alvéoles supérieures ;
- la figure 4 est une section longitudinale schématique d'une structure rigide selon l'invention ;
- la figure 5 est une section transversale schématique d'une structure rigide selon l'invention ;
- la figure 6 est une vue schématique en perspective de ¾ avant d'un tronçon d'un moyen de transport, en l'occurrence un avion, équipé de deux structures rigides selon l'invention montées en parallèle (pour une raison de compréhension la partie supérieure du fuselage n'est pas représentée) ;
- la figure 7 est une vue schématique en perspective de ¾ arrière du même tronçon d'avion que celui représenté sur la figure 6 ;
- la figure 8 est une section transversale schématique d'un tronçon d'un moyen de transport illustrant la possibilité de placer en parallèle une pluralité de structures modulaires rigides selon l'invention (4 dans ce cas) ;
- la figure 9 est une vue en perspective éclatée d'une variante de réalisation de la structure modulaire rigide selon l'invention ;
- la figure 10 est une vue en perspective partielle illustrant un bloc assise inférieur équipé d'un coffre à bagages accessible par un volet basculant formé par la structure de siège associée ;
- la figure 11 est une vue partielle, en perspective, d'une carlingue d'avion comprenant 4 structures modulaires conformes à l'invention.

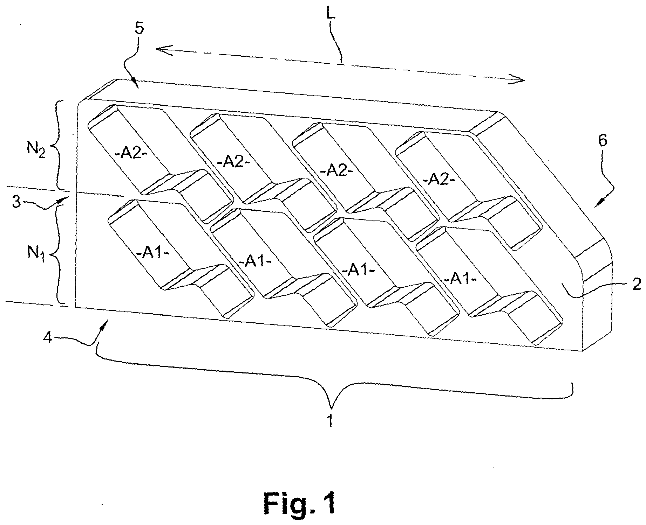

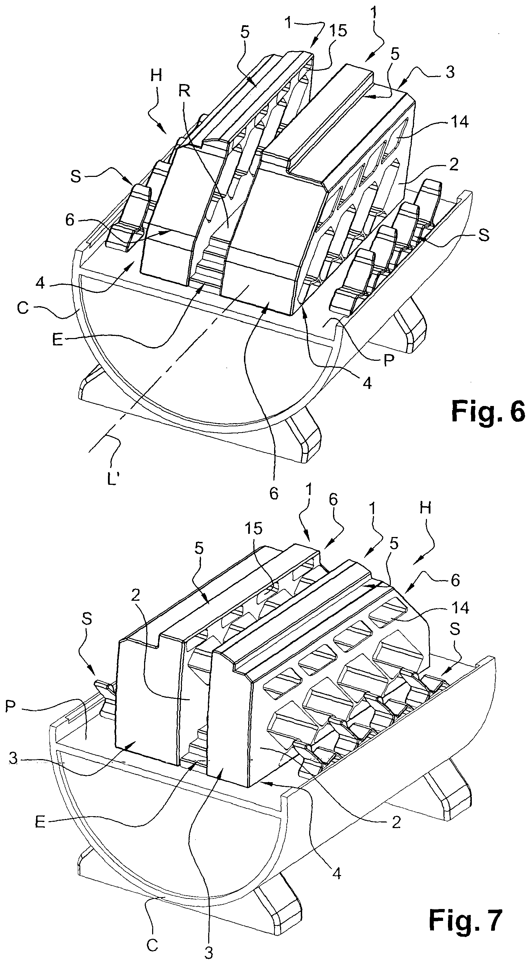

La structure modulaire rigide 1 illustrée par les figures 1 à 5 est destinée à être montée dans l'habitacle d'un moyen de transport, en particulier la carlingue d'un avion, sans cependant être aucunement limité à ce moyen de transport.
Un tel montage dans la carlingue d'un avion est en particulier illustré par les figures 6 et 7.

La structure modulaire rigide 1 définit globalement un volume de forme allongée selon un axe longitudinal L. Elle comprend une pluralité d'alvéoles sur deux étages, destinées à recevoir des passagers en position assise : des alvéoles inférieures A1 disposées les unes à la suite des autres selon une direction parallèle à l'axe longitudinal L, sur un niveau inférieur N1, et des alvéoles supérieures A2 disposées les unes à la suite des autres selon une direction parallèle à l'axe longitudinal L, sur un niveau supérieur N2 qui est supérieur au niveau inférieur N1.
Cette structure modulaire rigide 1 est délimitée par deux parois latérales verticales 2 parallèles entre elles et qui s'étendent selon l'axe longitudinal L, par une structure arrière 3, par une structure inférieure 4, par une structure supérieure 5 et, par une structure avant 6.
La structure inférieure 4 est destinée à reposer sur le plancher de l'habitacle du moyen de transport et à être fixée sur ce dernier, par tout moyen de solidarisation approprié (par exemple sur des rails équipant ce plancher).
La structure supérieure 5 est destinée à être solidarisée avec le plafond dudit habitacle, par tout moyen de solidarisation approprié.

Les alvéoles A1 et A2 sont ménagées entre les parois latérales 2 et entre lesdites structures arrière 3, inférieure 4, supérieure 5 et avant 6.

Les alvéoles inférieures A1, identiques entre elles, sont ouvertes dans l'une quelconque des parois latérales 2, ou bien elles traversent la structure rigide 1 de part en part.

Les alvéoles supérieures A2, identiques entre elles, sont ouvertes dans l'une quelconque des parois latérales 2, ou bien traversent la structure rigide 1 de part en part.

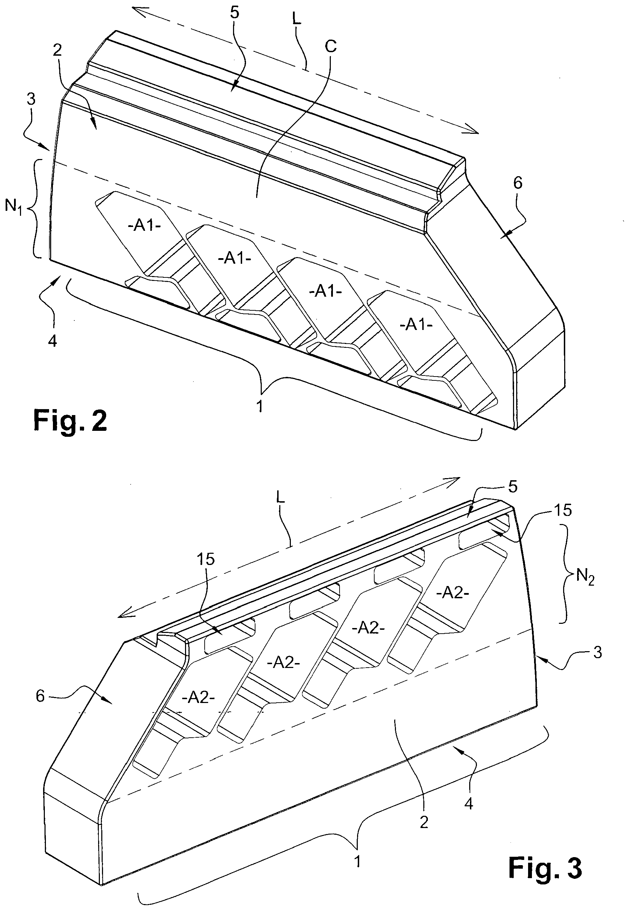

Sur la figure 1 les alvéoles A1, A2 traversent la structure 1 de part en part ; alors que sur les figures 2 et 3 les alvéoles inférieures A1 sont ouvertes uniquement dans l'une des parois latérales 2, les alvéoles supérieures A2 étant ouvertes dans l'autre paroi latérale 2.

Ces alvéoles A1, A2 sont destinées à recevoir chacune au moins un siège rapporté destiné à l'assise d'un passager.

Les alvéoles inférieures A1 et supérieures A2 ont un profil sensiblement identique afin de coopérer au mieux et de limiter la hauteur de l'ensemble de la structure modulaire rigide 1.

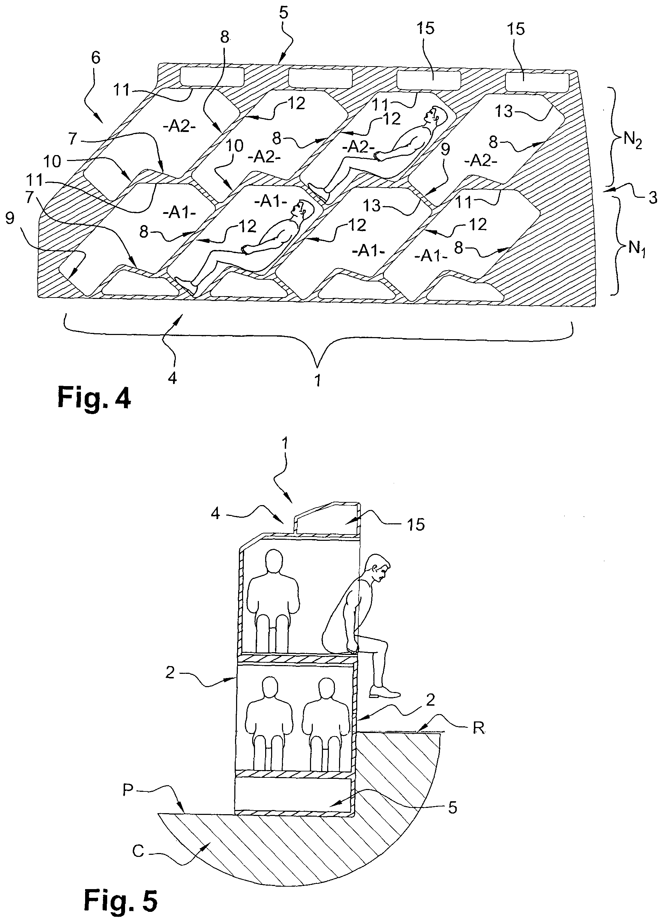

Pour ce faire le profil général de chaque alvéole A1 et A2 est prévu pour permettre une position assise aux passagers et se décompose comme suit, comme illustré sur la figure 4 :
- une assise 7 sensiblement horizontale,
- un dossier 8 sensiblement incliné par rapport à la verticale,
- un repose-pieds 9 sensiblement perpendiculaire au dossier 8,
- une surface d'appui 10 pour les jambes, sensiblement parallèle au dossier 8,
- un plafond 11 sensiblement horizontal,
- une face avant 12 sensiblement parallèle au dossier 8, et enfin,
- une zone supérieure 13, destinée à être située au dessus de la tête des passagers, sensiblement perpendiculaire au dossier incliné 8, faisant la liaison entre ce dossier 8 et le plafond 11.

Pour permettre au mieux la coopération des alvéoles inférieures A1 et supérieures A2, pour la majeure partie d'entre elles, les assises 7 des alvéoles supérieures A2 sont situées en opposition des plafonds 11 des alvéoles inférieures A1 ; les surfaces d'appui 10 des jambes des passagers des alvéoles supérieures A2 sont situées sensiblement dans le prolongement des dossiers 8 des alvéoles inférieures A1 ; les repose-pieds 9 des alvéoles supérieures A2 sont situées en opposition des zones supérieures 13 des alvéoles inférieures A1 ; la distance entre la structure inférieure 4 et le point bas des repose-pieds 9 des alvéoles supérieures A2 est inférieure à la distance entre cette structure inférieure 4 et les plafonds 11 des alvéoles inférieures A1 ; ceci permet de limiter au maximum la hauteur de l'ensemble de la structure rigide 1.
Enfin, les assises 7 des alvéoles supérieures A2 sont situées sensiblement à l'aplomb verticalement des assises 7 des alvéoles inférieures A1.

Comme on peut le voir sur les figures 6 et 7, l'axe longitudinal L de la structure rigide 1 est parallèle à l'axe longitudinal L' de la carlingue C de l'avion, et deux structures rigides 1 peuvent être montées en parallèle dans l'habitacle H de cette carlingue C (mais on peut envisager de monter plus de deux structures rigides 1 en parallèle dans le cas d'un habitacle H plus large).

Les passagers du niveau inférieur N1 accèdent aux alvéoles inférieures A1 par un côté de la structure rigide 1, et les passagers du niveau supérieur N2 par le côté opposé de la structure rigide 1 (figure 5). L'accès des passagers aux alvéoles inférieures A1 se fait à un niveau P de la carlingue C de l'avion et l'accès des passagers aux alvéoles supérieures A2 à un niveau supérieur R de la carlingue, lui-même surélevé par rapport au niveau P.

Les alvéoles inférieures A1 ou supérieures A2 se correspondent dans l'intervalle entre deux structures rigides 1, ceci afin de permettre aux passagers de partager le même niveau d'accès P ou R dans ledit intervalle (figures 6 et 7).

Sur ces deux figures 6 et 7, on remarque la présence d'un escalier E prévu entre les deux structures rigides 1 pour permettre l'accès au niveau supérieur R des alvéoles supérieures A2.
Une rangée S de sièges est prévue de chaque côté du couple de structures modulaires 1.

Une fenêtre latérale 14 perce la paroi 2 au fond de chaque alvéole supérieure A2, à l'opposé de l'ouverture d'accès. On peut prévoir une telle fenêtre 14 également dans la paroi 2 des alvéoles inférieures (à l'opposé de l'ouverture d'accès).

La structure modulaire 1 selon l'invention propose une amélioration du confort des passagers d'un moyen de transport en particulier dans un avion, sans diminuer sa capacité d'emport de passagers.

De par la fixation de ses structures inférieure 4 et supérieure 5, respectivement au plancher et au plafond de l'habitacle, elle participe à sa rigidité améliorant également la sécurité des passagers.

Comme on peut le voir sur les figures 3 à 7, la structure supérieure 5 intègre des coffres à bagages 15. Ces coffres à bagages 15 peuvent aussi être portés par les côtés de la structure supérieure 5, par exemple pour venir se positionner au dessus d'un couloir latéral, en étant accessibles depuis ce couloir ou depuis l'intérieur des alvéoles.

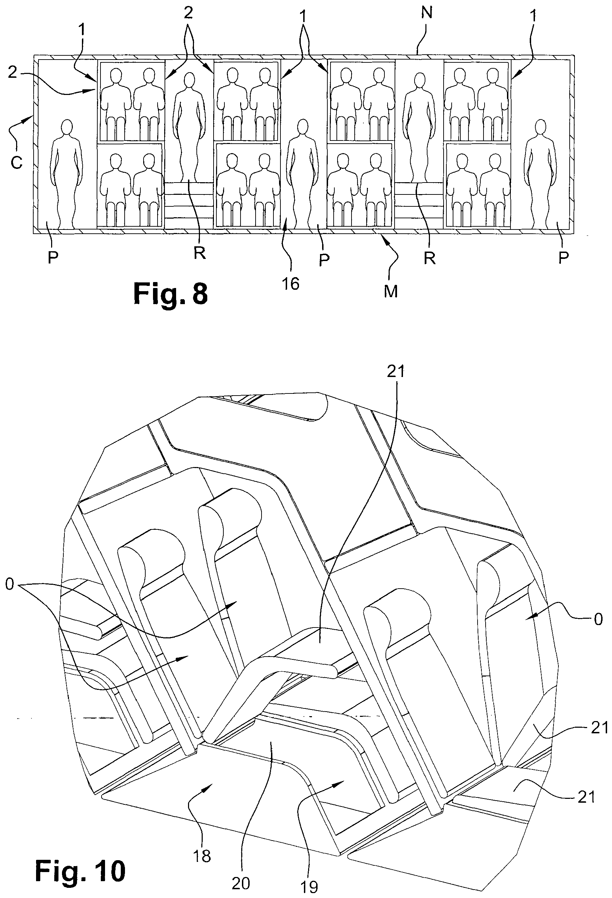

Sur la figure 8 on a représenté une coupe transversale partielle d'une carlingue C d'avion équipée de deux couples de structures modulaires 1 séparés par un couloir 16. Chaque structure modulaire 1 est fixée au plancher M de la carlingue C par tout moyen approprié et au plafond N également par tout moyen approprié.
Ici, chaque alvéole A1, A2 permet de loger deux passagers.

Les différents éléments constitutifs 2, 3, 4, 5 et 6 de la structure modulaire 1 peuvent être réalisés monobloc, ou chacun en différentes parties assemblées, en particulier pour définir les alvéoles de réception des passagers comprenant ici chacune deux places juxtaposées et recevant donc chacune deux structures de siège O.

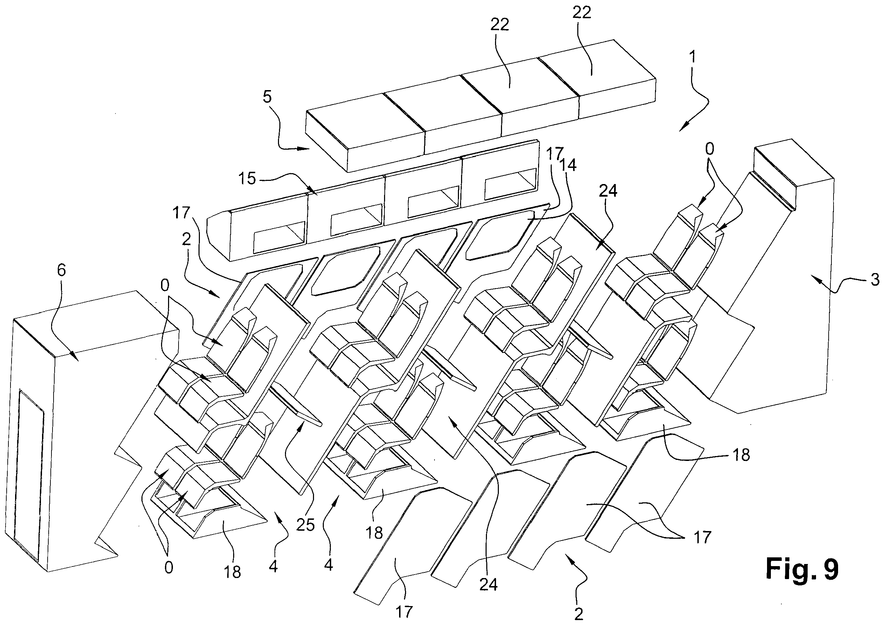

Une forme de réalisation possible de la structure modulaire rigide 1 est illustrée sur la figure 9, sur laquelle on peut voir que :
- Les parois verticales 2 sont réalisées par un assemblage de panneaux 17 (par exemple des panneaux inférieurs et des panneaux supérieurs), définissant les ouvertures d'accès aux alvéoles A1, A2, et comportant pour certains lesdites fenêtres latérales 14 ;
- La structure arrière 3 se présente sous la forme d'un caisson dont la face avant constitue la partie arrière (dossier) des alvéoles du dernier rang, et est conformée en conséquence.
Cette structure arrière 3 en forme de caisson comporte avantageusement une ouverture d'accès (non représentée), éventuellement obturée par une porte, pour constituer un local technique, un cabinet de toilettes ou autre.
- La structure inférieure 4 comprend ici des blocs assise inférieurs 18 agencés pour recevoir et supporter les structures de siège O des alvéoles inférieures.
Comme illustré sur la figure 10, ces blocs assise inférieurs 18 intègrent chacun un coffre à bagages 19 dont l'ouverture supérieure 20 est associée à un volet d'obturation constitué par l'assise 21 de la structure de siège O, prévue basculante.
Dans une variante de réalisation, l'accès aux coffres à bagages inférieurs 19 peut se faire latéralement, par une ouverture débouchant dans le couloir juxtaposé.
Comme précisé ci-dessus les blocs assise inférieurs 18 sont destinés à être fixés au plancher M de l'habitacle H de la carlingue C, par exemple au moyen des rails longitudinaux habituellement présents dans ledit plancher M d'une carlingue d'avion.
- La structure supérieure 5 comprend ici une embase de plafond 22 (monobloc ou en différentes parties assemblées), dont la partie supérieure est destinée à être fixée au plafond de l'habitacle de carlingue, et dont la partie inférieure forme le dessus des alvéoles supérieures.
La ou les embases de plafond 22 intègrent des coffres à bagages 15, ou bien elles servent de support pour de tels coffres à bagages 15, fixés latéralement et au plafond de l'habitacle.
- La structure avant 6 se présente sous la forme d'un caisson dont la face arrière constitue la partie avant des alvéoles du premier rang, et est conformée en conséquence pour épouser au mieux lesdites alvéoles en regard. Cette structure avant 6 en forme de caisson comporte avantageusement une ouverture d'accès, éventuellement obturée par une porte, pour constituer un local technique, un cabinet de toilettes ou autre.
A titre de variante, cette structure avant 6 peut se présenter sous la forme d'un simple panneau frontal structurel et décoratif.

Les alvéoles inférieures et supérieures A1, A2 sont délimitées entre les parois latérales 2, la structure arrière 3, la structure inférieure 4, la structure supérieure 5 et la structure avant, 6, au moyen de panneaux coudés 24 associés à des entretoises 25.

Les panneaux coudés 24 peuvent être pleins, échancrés ou ajourés ; ils sont adaptés pour séparer deux couples d'alvéoles inférieures et supérieures dans le sens longitudinal. Ils sont fixés en partie supérieure à la structure supérieure 5 et/ou au plafond de l'habitacle H de la carlingue C, et, en partie inférieure, à la structure inférieure 4 et/ou au plancher de l'habitacle H de la carlingue C.
Ils comportent chacun au moins une cloison de séparation des alvéoles inférieures et supérieures et une assise d'alvéole supérieure.
La structure avant 6 sert d'appui au panneau coudé 24 en regard pour les passagers du premier rang de la structure modulaire 1.

Les entretoises 25 relient deux panneaux coudés 24, ou un panneau coudé 24 avec la structure arrière 3 ou avec la structure avant 6.
Elles permettent de rigidifier la structure modulaire 1.

Ces entretoises 25 servent de repose-pieds 9 pour les alvéoles supérieures A2 et de zone supérieure 13 pour les alvéoles inférieures A1 ; elles peuvent être planes ou coudées selon les versions et le confort recherché.

Des consoles pour l'éclairage et le système d'apport d'oxygène peuvent être aménagées en partie supérieure des alvéoles. D'autre part, des écrans peuvent être prévus dans ou contre la face arrière des panneaux coudés 24.

Les parois latérales 2 sont globalement verticales, mais elle peuvent être localement déformées, par exemple pour conférer un peu plus d'espace aux passagers (en particulier au niveau des épaules), ou pour les bagages.

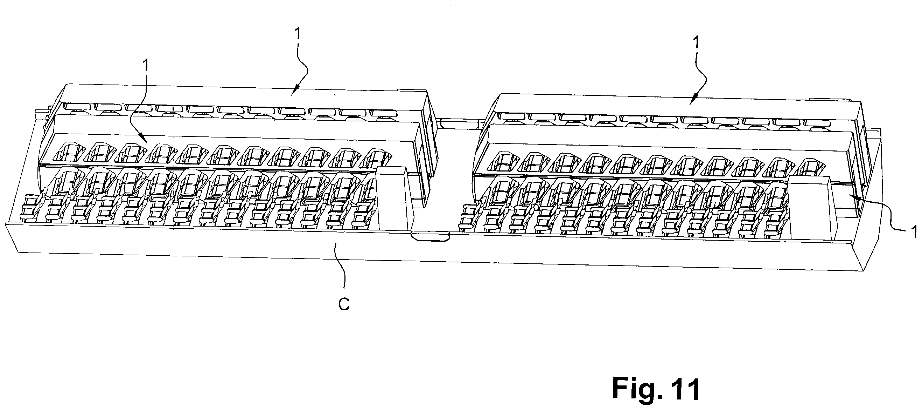

La figure 11 illustre schématiquement un exemple d'implantation de 4 structures modulaires 1 dans une portion de cabine d'avion.

Une telle structure 1 conforme à l'invention offre une très bonne résistance aux contraintes, en particulier aux contraintes verticales et longitudinales. En cas d'accident, les efforts générés par le poids de la structure, des passagers et des bagages sont encaissés et répartis par les différents éléments structurels, en particulier les panneaux coudés et les entretoises.
Elle permet de loger plus de passagers et dans un meilleur confort que dans une configuration classique.
L'aspect modulaire d'une telle structure permet très facilement de l'enlever ou de la repositionner pour adapter la configuration de l'habitacle par exemple selon les saisons.
Une telle structure permet aussi d'optimiser les volumes (coffres à bagages sous les assises inférieures, et au dessus ou sur les côtés des alvéoles supérieures ; utilisation de l'espace vertical (présence de 2 niveaux) ; intégration des toilettes ou espaces de rangement aux extrémités).
Elle facilite les accès et surtout les évacuations par le nombre important de couloirs présents ; et elle optimise l'intimité des passagers.

## Revendications

1. Structure modulaire (1) à double étage destinée à être montée dans l'habitacle (H) d'un moyen de transport tel qu'un avion, entre un plancher (M) et un plafond (N), pour l'assise des passagers,
laquelle structure modulaire (1) comprend :
- un volume général sensiblement allongé selon un axe longitudinal (L),
- une pluralité d'alvéoles inférieures (A1), disposées les unes à la suite des autres selon une direction parallèle audit axe longitudinal (L) de la structure (1) et sur un niveau inférieur (N1),
- une pluralité d'alvéoles supérieures (A2), disposées les unes à la suite des autres selon une direction parallèle audit axe longitudinal (L) de la structure (1) et sur un niveau supérieur (N2) situé au-dessus du niveau inférieur (N1),
ces alvéoles (A1, A2) étant destinées à recevoir chacune au moins une structure de siège (O) pour un passager,
les profils des alvéoles inférieures (A1) du niveau inférieur (N1) étant identiques ou sensiblement identiques aux profils des alvéoles supérieures (A2) du niveau supérieur (N2), chaque alvéole (A1 ou A2) possédant un profil général permettant une position assise, ce profil comprenant :
- une assise (7) horizontale ou sensiblement horizontale,
- un dossier (8) incliné par rapport à la verticale,
- un repose-pieds (9),
- une surface d'appui (10) des jambes des passagers,
- un plafond (11),
- une face avant (12) sensiblement parallèle au dossier (8),
lesdites assises (7) des alvéoles supérieures (A2) étant situées en opposition des plafonds (11) des alvéoles inférieures (A1),
**caractérisée en ce qu'**elle consiste en une structure rigide (1) délimitée au moins par - deux parois latérales verticales (2), parallèles entre elles, étendues selon une direction parallèle audit axe longitudinal (L), - une structure arrière (3) - une structure inférieure (4) destinée à reposer sur le plancher (M) dudit habitacle (H), et à être fixée sur ce dernier, et - une structure supérieure (5) destinée à être solidarisée avec le plafond (N) dudit habitacle (H), et entre lesquelles parois (2) et structures (3, 4, 5) sont ménagées lesdites alvéoles (A1, A2),
lesquelles alvéoles inférieures (A1) et supérieures (A2) sont ouvertes dans l'une quelconque desdites parois latérales verticale (2),
l'accès des passagers aux alvéoles inférieures (A1) du niveau inférieur (N1) se faisant du côté d'une paroi latérale verticale (2) de la structure rigide (1) et à un premier niveau (P) de l'habitacle (H) du moyen de transport, et
l'accès des passagers aux alvéoles supérieures (A2) du niveau supérieur (N2) se faisant du côté de la paroi latérale verticale (2) opposée à la précédente de la structure rigide (1), et à un second niveau (R) surélevé par rapport audit premier niveau (P).

2. Structure modulaire (1) selon la revendication 1, **caractérisée en ce que** ladite structure rigide (1) est encore délimitée par une structure avant (6) située dans le prolongement des parois latérales (2) , de la structure inférieure (4) et de la structure supérieure (5).

3. Structure modulaire (1) selon l'une quelconque des revendications 1 ou 2, **caractérisée en ce qu'**elle comporte une pluralité d'alvéoles inférieures (A1) et supérieures (A2) identiques ou sensiblement identiques entre elles, dans lesquelles :
- ledit repose-pieds (9) est sensiblement perpendiculaire au dossier (8),
- ladite surface d'appui (10) des jambes des passagers est sensiblement parallèle au dossier (8), lesdites surfaces d'appui (10) des alvéoles supérieures (A2) étant situées sensiblement dans le prolongement des dossiers (8) des alvéoles inférieures (A1),
- ledit plafond (11) est sensiblement horizontal,
- une zone supérieure (13) destinée à être située au-dessus de la tête des passagers est sensiblement perpendiculaire au dossier incliné (8),
- lesdits repose-pieds (9) des alvéoles supérieures (A2) sont situés en opposition desdites zones supérieures (13) des alvéoles inférieures (A1),
- la distance entre la structure inférieure (4) et le point bas desdits repose-pieds (9) des alvéoles supérieures (A2), est inférieure à la distance entre ladite structure inférieure (4) et lesdits plafonds (11) des alvéoles inférieures (A1), et
- lesdites assises (7) des alvéoles supérieures (A2) sont situées sensiblement à l'aplomb verticalement des assises (7) des alvéoles inférieures (A1).

4. Structure modulaire (1) selon l'une quelconque des revendications 1 à 3, **caractérisée en ce que** ladite structure avant (6) et/ou ladite structure arrière (3) se présente(nt) sous la forme d'un caisson muni d'au moins une ouverture d'accès, éventuellement obturée par une porte, pour constituer un local technique ou un cabinet de toilette.

5. Structure modulaire (1) selon l'une quelconque des revendications 1 à 4, **caractérisée en ce qu'**elle est réalisée par un assemblage d'éléments réalisés séparément, à savoir, au moins, - des panneaux coudés (24), - des entretoises (25) de panneaux coudés, - des blocs assise inférieurs (18), - des embases de plafond (22) et - des panneaux (17) de parois latérales (2).

6. Structure modulaire (1) selon l'une quelconque des revendications 1 à 5, **caractérisée en ce que** ladite structure supérieure (5) intègre ou supporte une pluralité de coffres à bagages (15).

7. Structure modulaire (1) selon l'une quelconque des revendications 1 à 6, **caractérisée en ce que** chacune des desdites alvéoles inférieures (A1) et supérieures (A2) comporte au moins une structure de siège (O) rapportée sur son assise (7).

8. Structure modulaire (1) selon la revendication 7, **caractérisée en ce que** ladite structure inférieure (4) comporte des blocs assise inférieurs (18) supportant au moins certaines des structures de sièges (O) des alvéoles inférieures (A1), et lesquels blocs assise inférieurs (18) intègrent chacun au moins un coffre à bagages (19) muni d'une ouverture (20) associée à un volet d'obturation, ladite ouverture (20) étant située sur le dessus dudit bloc assise inférieur (18) et l'assise (21) de ladite structure de siège (O) étant prévue basculante pour constituer ledit volet d'obturation.

9. Structure modulaire (1) selon l'une quelconque des revendications 1 à 8, **caractérisée en ce que** chaque alvéole supérieure (A2) comporte une fenêtre (14) dans la paroi (2) opposée à celle de son accès principal pour les passagers.

10. Aménagement d'une pluralité de structures modulaires (1) selon l'une quelconque des revendications 1 à 9 dans l'habitacle (H) d'un moyen de transport, **caractérisé en ce que** lesdites structures modulaires (1) sont placées côte à côte dans ledit habitacle (H), leurs axes longitudinaux (L) étant parallèles, et **en ce que**
les alvéoles inférieures (A1) ou supérieures (A2) se correspondent dans l'intervalle entre deux structures modulaires (1), ceci afin de partager le même niveau d'accès (P) ou (R), aux alvéoles inférieures (A1) ou supérieures (A2) dans ledit intervalle.

11. Aménagement d'une pluralité de structures modulaires (1) selon la revendication 10, **caractérisé en ce qu'**il comporte au moins une rangée (S) de sièges fixés au plancher (M) de l'habitacle (H) du moyen de transport, de chaque côté de la pluralité de structures modulaires (1).

## Patentansprüche

1. Modulare Struktur (1) mit zwei Etagen, die dazu bestimmt ist, im Fahrgastraum (H) eines Transportmittels wie zum Beispiel eines Flugzeugs zwischen einem Boden (M) und einer Decke (N) als Sitzmöglichkeit der Passagiere installiert zu werden,
wobei die modulare Struktur (1)
- ein entlang einer Längsachse (L) im Wesentlichen längliches Gesamtvolumen,
- eine Anzahl unterer Kammern (A1), die eine nach der anderen in einer zur Längsachse (L) der Struktur (1) parallelen Richtung und auf einem unteren Niveau (N1) angeordnet sind,
- eine Anzahl oberer Kammern (A2), die eine nach der anderen in einer zur Längsachse (L) der Struktur (1) parallelen Richtung und auf einem oberhalb des unteren Niveaus (N1) liegenden oberen Niveau (N2) angeordnet sind,
aufweist,
wobei die Kammern (A1, A2) jeweils dazu bestimmt sind, wenigstens eine Sitzstruktur (O) für einen Passagier aufzunehmen, wobei die Profile der unteren Kammern (A1) des unteren Niveaus (N1) mit den Profilen der oberen Kammern (A2) des oberen Niveaus (N2) identisch oder im Wesentlichen identisch sind, wobei jede Kammer (A1 oder A2) ein allgemeines Profil aufweist, das eine Sitzposition ermöglicht, wobei dieses Profil
- eine horizontale oder im Wesentlichen horizontale Sitzfläche (7),
- eine gegenüber der Senkrechten geneigte Rückenlehne (8),
- eine Fußstütze (9),
- eine Auflagefläche (10) für die Beine der Passagiere,
- eine Decke (11),
- eine zur Rückenlehne (8) im Wesentlichen parallele Vorderseite (12)
aufweist,
wobei die Sitzflächen (7) der oberen Kammern (A2) den Decken (11) der unteren Kammern (A1) gegenüberliegen,
**dadurch gekennzeichnet, daß** sie aus einer steifen Struktur (1) besteht, die wenigstens durch - zwei zueinander parallele Seitenwände (2), die sich in einer zur Längsachse (L) parallelen Richtung erstrecken, - eine hintere Struktur (3), - eine untere Struktur ((4), die dazu bestimmt ist, auf dem Boden (M) des Fahrgastraums (H) zu ruhen und auf letzterem befestigt zu werden, und - eine obere Struktur (5), die dazu bestimmt ist, mit der Decke (N) des Fahrgastraums (H) verbunden zu werden, begrenzt ist, wobei zwischen den Wänden (2) und den Strukturen (3, 4, 5) die Kammern (A1, A2) eingerichtet sind,
wobei die unteren (A1) und die oberen (A2) Kammern an einer der senkrechten Seitenwände (2) geöffnet sind,
wobei der Zugang der Passagiere zu den unteren Kammern (A1) des unteren Niveaus (N1) auf der Seite einer senkrechten Seitenwand (2) der steifen Struktur (1) und auf einem ersten Niveau (P) des Fahrgastraums (H) des Transportmittels erfolgt und
der Zugang der Passagiere zu den oberen Kammern (A2) des oberen Niveaus (N2) auf der Seite der der vorgenannten Seitenwand gegenüberliegenden senkrechten Seitenwand (2) der steifen Struktur (1) und auf einem gegenüber dem ersten Niveau (P) höherliegenden zweiten Niveau (R) erfolgt.

2. Modulare Struktur (1) gemäß Anspruch 1, **dadurch gekennzeichnet, daß** die steife Struktur (1) außerdem durch eine vordere Struktur (6) begrenzt ist, die in der Verlängerung der Seitenwände (2), der unteren Struktur (4) und der oberen Struktur (5) gelegen ist.

3. Modulare Struktur (1) gemäß einem der Ansprüche 1 oder 2, **dadurch gekennzeichnet, daß** sie eine Anzahl untereinander identischer oder im Wesentlichen identischer unterer (A1) und oberer (A2) Kammern aufweist, in denen
- die Fußstütze (9) im Wesentlichen senkrecht zur Rückenlehne (8) ist,
- die Auflagefläche (10) für die Beine der Passagiere im Wesentlichen parallel zur Rückenlehne (8) ist, wobei sich die Auflageflächen (10) der oberen Kammern (A2) im Wesentlichen in Verlängerung der Rückenlehnen (8) der unteren Kammern (A1) befinden,
- die Decke (11) im Wesentlichen horizontal ist,
- eine obere Zone (13), die dazu bestimmt ist, oberhalb des Kopfes der Passagiere gelegen zu sein, im Wesentlichen senkrecht zur geneigten Rückenlehne (8) ist,
- die Fußstützen (9) der oberen Kammern (A2) gegenüber den oberen Zonen (13) der unteren Kammern (A1) gelegen sind,
- die Entfernung zwischen der unteren Struktur (4) und dem unteren Punkt der Fußstützen (9) der oberen Kammern (A2) kleiner als die Entfernung zwischen der unteren Struktur (4) und den Decken (11) der unteren Kammern (A1) ist und
- die Sitzflächen (7) der oberen Kammern (A2) im Wesentlichen senkrecht über den Sitzflächen (7) der unteren Kammern (A1) liegen.

4. Modulare Struktur (1) gemäß einem der Ansprüche 1 bis 3, **dadurch gekennzeichnet, daß** die vordere Struktur (6) und/oder die hintere Struktur (3) die Form eines mit wenigstens einer eventuell mit einer Tür verschlossenen Zugangsöffnung versehenen Kastens hat (bzw. haben), um ein technisches Lokal oder eine Toilette zu bilden.

5. Modulare Struktur (1) gemäß einem der Ansprüche 1 bis 4, **dadurch gekennzeichnet, daß** sie durch Zusammensetzen getrennt hergestellter Elemente gebildet ist, und zwar wenigstens - abgewinkelte Paneele (24), - Zwischenstücke (25) für die abgewinkelten Paneele, - untere Sitzblöcke (18), - Deckensockel (22) und - Paneele (17) der Seitenwände (2).

6. Modulare Struktur (1) gemäß einem der Ansprüche 1 bis 5, dadurch gekenntzeichnet, daß die obere Struktur (5) eine Anzahl Gepäckfächer (15) beinhaltet oder trägt.

7. Modulare Struktur (1) gemäß einem der Ansprüche 1 bis 6, **dadurch gekennzeichnet, daß** jede der unteren (A1) und der oberen (A2) Kammern wenigstens eine auf der Sitzfläche (7) angebrachte Sitzstruktur (O) aufweist.

8. Modulare Struktur (1) gemäß Anspruch 7, **dadurch gekennzeichnet, daß** die untere Struktur (4) untere Sitzblöcke (18) aufweist, die wenigstens einige der Sitzstrukturen (O) der unteren Kammern (A1) tragen, und daß die unteren Sitzblöcke (18) jeweils wenigstens ein mit einer Öffnung (20), der eine Verschlußklappe zugeordnet ist, versehenes Gepäckfach (19) beinhalten, wobei die Öffnung (20) auf der Oberseite des unteren Sitzblocks (18) und die Sitzfläche (21) der Sitzstruktur (O) kippbar ausgelegt ist, um die Verschlußklappe zu bilden.

9. Modulare Struktur (1) gemäß einem der Ansprüche 1 bis 8, **dadurch gekennzeichnet, daß** jede obere Kammer (A2) in der dem Hauptzugang für die Passagiere gegenüberliegenden Wand (2) ein Fenster (14) aufweist.

10. Anordnung einer Anzahl von modularen Strukturen (1) gemäß einem der Ansprüche 1 bis 9 im Fahrgastraum (H) eines Transportmittels, **dadurch gekennzeichnet, daß** die modularen Strukturen (1) im Fahrgastraum (H) nebeneinandergesetzt sind, wobei deren Längsachsen (L) parallel sind, und daß
sich die unteren (A1) und die oberen (A2) Kammern hinsichtlich des Zwischenraums zwischen zwei modularen Strukturen (1) entsprechen, um das gleiche Zugangsniveau (P) oder (R) zu den unteren (A1) oder oberen (A2) Kammern im besagten Zwischenraum zu teilen.

11. Anordnung einer Anzahl von modularen Strukturen (1) gemäß Anspruch 10, **dadurch gekennzeichnet, daß** sie auf beiden Seiten der Anzahl modularer Strukturen (1) wenigstens eine Reihe (S) von auf dem Boden (M) des Fahrgastraums (H) des Transportmittels befestigten Sitzen aufweist.

## Claims

1. Double-level modular structure (1) intended to be mounted in the compartment (H) of a means of transport such as a plane, between a floor (M) and a ceiling (N), for the passengers to seat,
which modular structure (1) comprises:
- a general volume substantially elongated along a longitudinal axis (L),
- a plurality of lower cells (A1), arranged one after the other along a direction parallel to said longitudinal axis (L) of the structure (1) and on a lower level (N1),
- a plurality of upper cells (A2), arranged one after the other along a direction parallel to said longitudinal axis (L) of the structure (1) and on an upper level (N2) located above said lower level (N1),
such cells (A1, A2) being intended to each receive at least one seat structure (O) for a passenger,
the profiles of the lower cells (A1) of the lower level (N1) being identical or substantially identical to the profiles of the upper cells (A2) of the upper level (N2), each cell (A1, A2) having a general profile allowing a seated position, this profiles comprising:
- a horizontal or substantially horizontal seating base (7),
- a back (8) inclined with respect to the vertical,
- a footrest (9),
- a passenger leg rest surface (10),
- a ceiling (11),
- a front face (12) substantially parallel to the back (8),
said seating bases (7) of the upper cells (A2) being located opposite the ceilings (11) of the lower cells (A1);
**characterized in that** it consists in a rigid structure (1) delimited at least by - two vertical lateral walls (2), parallel to each other, extended along a direction parallel to said longitudinal axis (L), - a rear structure (3), - a lower structure (4) intended to rest on the floor (M) of said compartment (H), and to be fixed to the latter, and - an upper structure (5) intended to be fastened to the ceiling (N) of said compartment (H), and between which walls (2) and structures (3, 4, 5) are arranged said cells (A1, A2),
said lower (A1) and upper (A2) cells are open in any one of said vertical lateral walls (2), the passengers getting to the lower cells (A1) of the lower level (N1) from the side of a vertical lateral wall (2) of the rigid structure (1) and at a first level (P) of the compartment (H) of the means of transport, and
the passengers getting to the upper cells (A2) of the upper level (N2) from the side of a vertical lateral wall (2) that is opposed to the preceding one of the rigid structure (1), and at a second level (R), raised with respect to said first level (P).

2. Modular structure (1) according to claim 1, **characterized in that** said rigid structure (1) is also delimited by a front structure (6) located in the continuation of the lateral walls (2), of the lower structure (4) and of the upper structure (5).

3. Modular structure (1) according to any one of claims 1 or 2, **characterized in that** it includes a plurality of lower (A1) and upper (A2) cells identical or substantially identical to each other, in which:
- said footrests (9) is substantially perpendicular to the back (8),
- said passenger leg rest surface (10) is substantially parallel to the back (8), said rest surfaces (10) of the upper cells (A2) being substantially located in the continuation of the backs (8) of the lower cells (A1),
- said ceiling (11) is substantially horizontal,
- an upper area (13) intended to be located above the passengers' head is substantially perpendicular to the inclined back (8),
- said footrests (9) of the upper cells (A2) are located opposite said upper areas (13) of the lower cells (A1),
- the distance between the lower structure (4) and the bottom point of said footrests (9) of the upper cells (A2) is smaller than the distance between said lower structure (4) and said ceilings (11) of the lower cells (A1), and
- said seating bases (7) of the upper cells (A2) are located substantially directly vertically above the seats (7) of the lower cells (A1).

4. Modular structure (1) according to any one of claims 1 to 3, **characterized in that** said front structure (6) and/or said rear structure (3) are in the form of a caisson provided with at least one access opening, possibly closed by a door, to provide a technical room or a toilet room.

5. Modular structure (1) according to any ane of claims 1 to 4, **characterized in that** it is made by an assembly of elements made separately, i.e., at least, - bent panels (24), - bent panel spacers (25), - lower seating base blocks (18), - ceiling bases (22), and - panels (17) of lateral walls (2).

6. Modular structure (1) according to any one of claims 1 to 5, **characterized in that** said upper structure (5) integrates or supports a plurality of luggage compartments (15).

7. Modular structure (1) according to any one of claims 1 to 6, **characterized in that** each of said lower (A1) and upper (A2) cells include at least one seat structure (O) added on its seating base (7).

8. Modular structure (1) according to claim 7, **characterized in that** said lower structure (4) includes lower seating base blocks (18) supporting at least certain of the seat structures (O) of the lower cells (A1), and which seating base blocks (18) each integrate at least one luggage compartment (19) provided with an opening (20) associated with a closing flap, said opening (20) being located on the top of said lower seating base block (18) and the seating base (21) of said seat structure (O) being tiltable to form said closing flap.

9. Modular structure (1) according to any one of claims 1 to 8, **characterized in that** each upper cell (A2) includes a window (14) in the wall (2) opposite to that of its main access for the passengers.

10. Arrangement of a plurality of modular structures (1) according to any one of claims 1 to 9 in the compartment (H) of a means of transport, **characterized in that** said modular structures (1) are placed side by side in said compartment (H), the longitudinal axes (L) thereof being parallel to each other, and **in that**
the lower (A1) or upper (A2) cells correspond to each other in the interval between two modular structures (1), in order to share the same level of access (P) or (R) to the lower (A1) or upper (A2) cells in said interval.

11. Arrangement of a plurality of modular structures (1) according to claim 10, **characterized in that** it includes at least one row (S) of seats fixed to the floor (M) of the compartment (H) of the means of transport, on each side of the plurality of modular structures (1).
